# FASCICULE DE BREVET EUROPEEN

(11) **EP 3 022 974 B1**
(45) Date de publication et mention de la délivrance du brevet: **30.05.2018**
(21) Numéro de dépôt: 14738520.7
(22) Date de dépôt: 11.07.2014
(51) Int. Cl.: H04W 60/02, H04W 60/04

(54) **ÉQUIPEMENT UTILISATEUR PROPOSANT UNE DURÉE À APPLIQUER À UNE TEMPORISATION À FIXER PAR UN ÉQUIPEMENT D'UN RÉSEAU COEUR**
BENUTZERVORRICHTUNG MIT DURCH EINE VORRICHTUNG IN EINEM KERNNETZWERK FESTZULEGENDER ZEITVERZÖGERUNG
USER EQUIPMENT OFFERING A DURATION TO BE APPLIED TO A TIME DELAY TO BE SET BY EQUIPMENT OF A CORE NETWORK

(30) Priorité: 15.07.2013 FR 1356951
(43) Date de publication de la demande: 25.05.2016
(73) Titulaire: SAGEMCOM BROADBAND SAS, 92500 Rueil Malmaison (FR)
(72) Inventeur: LALAM, Massinissa, F-92500 Rueil Malmaison (FR)
(74) Mandataire: Cabinet Le Guen Maillet
(86) Numéro de dépôt international: PCT/EP2014/064951
(87) Numéro de publication internationale: WO 2015/007651

(56) Documents cités:
- EP-A1- 2 464 180
- US-A1- 2010 189 036

## Description

La présente invention concerne une gestion d'un équipement utilisateur dans un réseau de communication cellulaire et plus particulièrement d'une temporisation périodique utilisée par ledit équipement utilisateur pour émettre une requête de mise à jour de zones de localisation.

Dans un réseau de communication cellulaire, chaque équipement utilisateur UE (« User Equipment » en anglais) doit préciser sa position (au niveau cellule) à un équipement du réseau de communication cellulaire en charge de gérer la mobilité des équipements utilisateur au sein du réseau de communication cellulaire. Cet équipement du réseau de communication cellulaire transmet la position de l'équipement utilisateur UE à une base de données en charge de mémoriser les positions de chaque équipement utilisateur UE, de manière à permettre audit équipement utilisateur UE d'être contacté par interrogation de ladite base de données. Lorsque l'équipement utilisateur est en communication (on parle de « connected UE » en anglais), cette localisation ne pose pas de problème particulier, puisque l'équipement utilisateur accède au réseau de communication cellulaire à travers une ou plusieurs stations de base dont la position géographique est connue *a priori* de la base de données. Un problème se pose lorsque le mobile est allumé mais est inactif, c'est-à-dire que l'équipement utilisateur n'est pas en communication (on parle de « idle UE »). Afin d'adresser ce problème, des zones géographiques sont typiquement définies par regroupement de plusieurs cellules servies par plusieurs stations de base respectives. La norme GSM (« Global System for Mobile Communication » en anglais) utilise la notion d'aire de localisation (« Location Area » en anglais), la norme UMTS (« Universal Mobile Telecommunications System » en anglais) ajoute la notion d'aire de routage (« Routing Area » en anglais), et la norme LTE (« Long-Term Evolution » en anglais) utilise la notion d'aire de traque (« Tracking Area » en anglais), mais ces notions correspondent au même concept. Chaque zone de localisation possède un identifiant propre, qui est transmis par les stations de base servant les cellules appartenant à ladite zone de localisation, ce qui permet à chaque équipement utilisateur UE de savoir dans quelle zone de localisation ledit équipement utilisateur UE se trouve et à la base de données de savoir dans quelle zone de localisation ledit équipement utilisateur UE se trouve.

Chaque équipement utilisateur UE déclenche une procédure d'attachement au réseau (au démarrage par exemple) en indiquant la zone de localisation dans laquelle ledit équipement utilisateur UE se trouve. En cas de réponse positive à cette procédure d'attachement, l'équipement utilisateur UE reçoit alors une liste de zones de localisation que ledit équipement utilisateur UE doit à présent surveiller.

Chaque équipement utilisateur UE ayant déjà réussi une procédure d'attachement possède une liste de zones de localisation que ledit équipement utilisateur UE doit surveiller. Cette liste contient obligatoirement la zone de localisation où se trouve ledit équipement utilisateur UE et typiquement des zones de localisations adjacentes. Chaque équipement utilisateur UE déclenche une procédure de mise à jour de zones de localisation lorsque ledit équipement utilisateur UE détecte que ledit équipement utilisateur UE se trouve dans une zone de localisation n'appartement pas à la liste de zones de localisation que ledit équipement utilisateur UE doit surveiller. En cas de réponse positive à cette procédure de mise à jour de zones de localisation, l'équipement utilisateur UE reçoit alors une nouvelle liste de zones de localisation que ledit équipement utilisateur UE doit à présent surveiller.

Chaque équipement utilisateur UE déclenche également, de manière périodique, une procédure de mise à jour de zones de localisation tant que ledit équipement utilisateur UE n'entre pas dans une zone de localisation n'appartenant pas à la liste de zones de localisation que le dit équipement utilisateur UE doit surveiller, ceci afin de signifier dans quelle zone de localisation ledit équipement utilisateur UE se trouve à l'intérieur de la liste de zones de localisation que ledit équipement utilisateur UE doit surveiller. En cas de réponse positive à cette procédure de mise à jour périodique de zones de localisation, l'équipement utilisateur UE peut recevoir une nouvelle liste de zones de localisation que ledit équipement utilisateur UE doit à présent surveiller ou, en l'absence d'indication spécifique, conserver la même liste de zones de localisation que ledit équipement utilisateur UE surveillait jusqu'alors. La périodicité de déclenchement de cette procédure est définie grâce à une temporisation dont la durée est précisée par l'équipement du réseau de communication cellulaire en charge de gérer la mobilité des équipements utilisateur au sein du réseau de communication cellulaire. La durée de cette temporisation est typiquement fixée en fonction de critères de charge du réseau de communication cellulaire. Dans la norme GSM, cette temporisation est définie par le compteur T3213 ; dans la norme UMTS, cette temporisation est donnée par le compteur T3312 ; et, dans la norme LTE, cette temporisation est donnée par le compteur T3412. Cependant, certains équipements utilisateur n'ont pas les mêmes conditions d'usage que d'autres. Par exemple, une passerelle résidentielle ou un compteur intelligent (« smart meter » en anglais) n'a pas de caractère mobile, contrairement à un téléphone intelligent (« smartphone » en anglais). Ainsi, de nombreux échanges de messages interviennent dans le réseau de communication, alors que des équipements utilisateur concernés n'ont pas, ou peu, de caractère mobile.

Le document US2010/0189036 décrit une méthode de négociation et de transmission entre une station mobile et une passerelle réseau d'une durée de temporisation périodique entre deux mises à jour d'une information de localisation.

Le document EP2464180 propose une méthode permettant une mise à jour d'informations de localisation dans un mode inactif, dans un réseau sans fils. Dans cette méthode, une station mobile fournit à une station de base des informations sur des caractéristiques de mobilité de la station mobile. Les informations sont de type, « immobile », « mouvement lent », « mouvement moyen » ou « mouvement rapide ». Les informations sur les caractéristiques de mobilité de la station mobile sont ensuite utilisées par la station de base pour fixer une durée de temporisation et la fournir à la station de base.

Il est souhaitable de pallier ces inconvénients de l'état de la technique.

Il est notamment souhaitable de limiter les échanges de messages dans le réseau de communication cellulaire, et plus particulièrement de limiter les échanges dans le cadre de procédures NAS (« Non-Access Stratum » en anglais).

Il est notamment souhaitable de fournir une solution qui soit simple à mettre en oeuvre.

L'invention concerne un procédé de gestion d'un équipement utilisateur dans un réseau de communication cellulaire comportant un réseau coeur interconnectant un ensemble de cellules, un équipement du réseau coeur étant en charge de gérer la mobilité des équipements utilisateur entre les cellules, l'équipement utilisateur transmettant audit équipement du réseau coeur un message de requête d'attachement pour s'enregistrer auprès du réseau coeur, l'équipement utilisateur transmettant audit équipement du réseau coeur un message de requête de mise à jour de zones de localisation à l'expiration d'une temporisation périodique de durée fixée par ledit équipement du réseau coeur dans un message d'acceptation d'attachement et/ou dans un message d'acceptation de mise à jour de zones de localisation ledit équipement utilisateur incluant, dans chaque message de requête d'attachement au réseau coeur et/ou dans chaque message de requête de mise à jour de zones de localisation, une proposition de durée à appliquer à ladite temporisation. L'équipement utilisateur est apte à inclure dans un message de requête d'attachement au réseau coeur ou de requête de mise à jour de zones de localisation une information représentative d'une désactivation de ladite temporisation provoquant une activation dans ledit équipement du réseau coeur d'une autre temporisation d'une durée prédéterminée permettant audit équipement du réseau coeur de transmettre au moins un message de recherche dudit équipement utilisateur, lorsque l'équipement utilisateur n'a pas établi de connexion via le réseau de communication cellulaire avant expiration de ladite autre temporisation.

Ainsi, en permettant à l'équipement utilisateur de proposer audit équipement du réseau coeur une durée de ladite temporisation, il est possible pour l'équipement du réseau coeur de prendre en compte le fait que l'équipement utilisateur puisse avoir, ou pas ou peu, de caractère mobile. La durée effective de la temporisation étant au final fixée par ledit équipement du réseau coeur, cela permet à l'équipement du réseau coeur de confirmer ou d'infirmer la durée proposée, choix pouvant prendre en outre en compte des critères de charge du réseau de communication cellulaire. Par ailleurs, ledit équipement du réseau coeur peut s'assurer de la présence dudit équipement utilisateur dans le réseau de communication cellulaire, même si la procédure périodique de mise à jour de zones de localisation est suspendue.

Selon un mode de réalisation particulier, l'équipement utilisateur étant destiné à être immobile, l'équipement utilisateur définit ladite proposition de durée comme étant représentative d'une désactivation de ladite temporisation. Ainsi, les échanges sont significativement réduits dans les procédures NAS lorsque l'équipement utilisateur est destiné à être immobile (suppression de la procédure NAS mise à jour périodique de zones de localisation, la fréquence et les occurrences des autres procédures NAS étant inchangées).

Selon un mode de réalisation particulier, ledit équipement du réseau coeur réinitialise ladite autre temporisation lorsque ledit équipement du réseau coeur reçoit, en provenance dudit équipement utilisateur, un message de requête de mise à jour de zones de localisation. Ainsi, la réception d'une telle requête permet à l'équipement dudit réseau coeur de confirmer que ledit équipement utilisateur est toujours présent dans le réseau de communication cellulaire.

Selon un mode de réalisation particulier, ledit équipement du réseau coeur limite, dans le message d'acceptation d'attachement et/ou dans le message d'acceptation de mise à jour de zones de localisation, une liste de zones de localisation à surveiller par ledit équipement utilisateur à une unique zone de localisation. Ainsi, moins de messages de recherche dudit équipement utilisateur sont envoyés pour s'assurer de la présence dudit équipement utilisateur dans le réseau de communication cellulaire.

Selon un mode de réalisation particulier, ledit équipement du réseau coeur identifie ladite unique zone de localisation en extrayant du message de requête d'attachement au réseau coeur et/ou du message de requête de mise à jour de zones de localisation une information représentative d'une zone de localisation où est localisé ledit équipement utilisateur.

Selon un mode de réalisation particulier, ledit équipement utilisateur est une passerelle résidentielle ou un compteur intelligent.

L'invention concerne également un équipement utilisateur destiné à être utilisé dans un réseau de communication cellulaire comportant un réseau coeur interconnectant un ensemble de cellules, un équipement du réseau coeur étant en charge de gérer la mobilité des équipements utilisateur entre les cellules, l'équipement utilisateur étant adapté pour transmettre audit équipement du réseau coeur un message de requête d'attachement pour s'enregistrer auprès du réseau coeur, l'équipement utilisateur étant aussi adapté pour transmettre audit équipement du réseau coeur un message de requête de mise à jour de zones de localisation à l'expiration d'une temporisation périodique de durée fixée par ledit équipement du réseau coeur dans un message d'acceptation d'attachement et/ou dans un message d'acceptation de mise à jour de zones de localisation, ledit équipement utilisateur comportant des moyens pour inclure, dans chaque message de requête d'attachement au réseau coeur et/ou dans chaque message de requête de mise à jour de zones de localisation, une proposition de durée à appliquer à ladite temporisation. Ledit équipement utilisateur comprend des moyens pour inclure dans un message de requête d'attachement au réseau coeur ou de requête de mise à jour de zones de localisation une information représentative d'une désactivation de ladite temporisation provoquant une activation dans ledit équipement du réseau coeur d'une autre temporisation d'une durée prédéterminée permettant audit équipement du réseau coeur de transmettre au moins un message de recherche dudit équipement utilisateur, lorsque l'équipement utilisateur n'a pas établi de connexion via le réseau de communication cellulaire avant expiration de ladite autre temporisation.

Selon un mode de réalisation particulier, ledit équipement utilisateur est une passerelle résidentielle ou un compteur intelligent.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un réseau de communication cellulaire dans lequel la présente invention peut être implémentée ;
- la Fig. 2 illustre schématiquement un exemple d'architecture matérielle d'un équipement utilisateur du réseau de communication cellulaire ;
- la Fig. 3 illustre schématiquement un exemple d'architecture matérielle d'un équipement en charge de gérer la mobilité des équipements utilisateur au sein du réseau de communication cellulaire ;
- la Fig. 4A illustre schématiquement des échanges dans le cadre d'une procédure d'enregistrement de l'équipement utilisateur auprès du réseau de communication cellulaire ;
- la Fig. 4B illustre schématiquement des échanges dans le cadre d'une procédure de mise à jour de zones de localisation ;
- la Fig. 5A illustre schématiquement un algorithme de gestion d'une temporisation de vérification de la présence de l'équipement utilisateur dans le réseau de communication cellulaire ;
- la Fig. 5B illustre schématiquement un algorithme de vérification de la présence de l'équipement utilisateur dans le réseau de communication cellulaire.

La description suivante d'un exemple de réalisation est donnée avec la terminologie associée aux technologies LTE, mais l'homme du métier peut aisément la dériver à d'autres technologies cellulaires, notamment, mais pas exclusivement, aux technologies GSM, GPRS, UMTS.

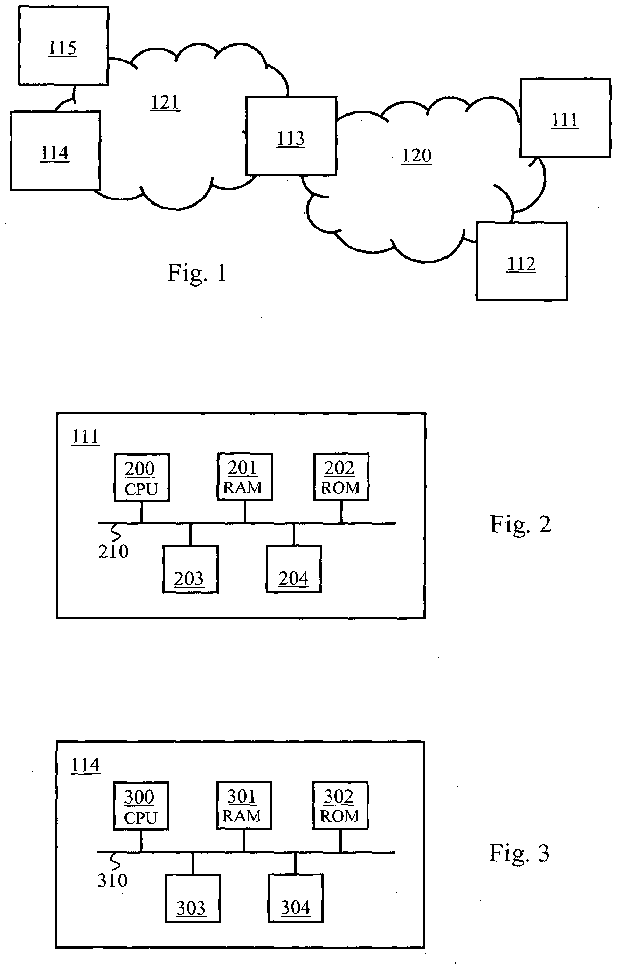

La Fig. 1 illustre schématiquement un réseau de communication cellulaire, dans lequel l'invention peut être mise en oeuvre. Le réseau de communication cellulaire comporte un réseau coeur (« Core Network » en anglais) 121 et un ensemble de cellules. Une unique cellule 120 est représentée sur la Fig. 1 par souci de simplification. Chaque cellule est gérée par une station de base 113, aussi appelée eNodeB dans les technologies LTE. Les cellules du réseau de communication cellulaire sont géographiquement regroupées en zones de localisation, chacune étant identifiée par un code de zone de localisation (LAC pour « Location Area Code » en anglais). Chaque cellule permet à des équipements utilisateur 111, 112 d'accéder aux services du réseau de communication cellulaire.

Le réseau coeur comporte un équipement 114 en charge de gérer la mobilité des équipements utilisateur entre des cellules couvrant une zone géographique donnée. Cet équipement est appelé MME (« Mobility Management Entity » en anglais) dans les technologies LTE. Par souci de simplification, l'équipement en charge de gérer la mobilité des équipements utilisateur entre les cellules est appelé par la suite *équipement MME.* Le réseau coeur comporte en outre un équipement 115 en charge de gérer des profils utilisateurs de souscription aux services du réseau de communication cellulaire. Cet équipement est appelé HSS (« Home Subscriber Server » en anglais) dans les technologies LTE. Par souci de simplification, l'équipement en charge de gérer les profils utilisateurs est appelé par la suite *équipement HSS.*

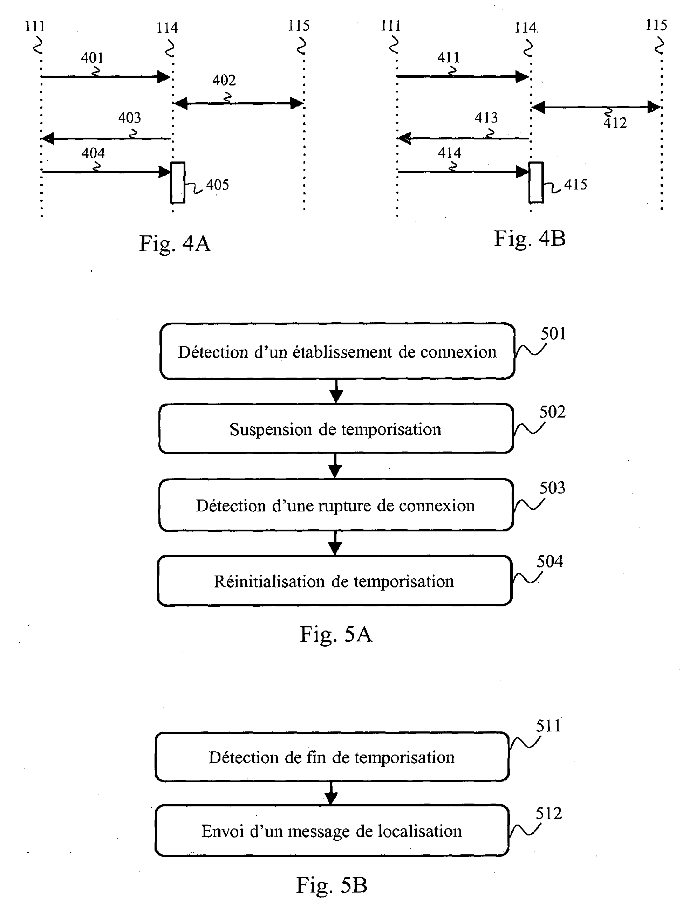

Pour permettre à l'équipement utilisateur 111 de s'enregistrer auprès du réseau coeur (ou plus généralement auprès du réseau de communication cellulaire), l'équipement utilisateur 111 est adapté pour transmettre à l'équipement MME 114 un message de requête d'attachement. Une procédure se met alors en place entre l'équipement utilisateur 111 et l'équipement MME 114, tel que décrit ci-après en relation avec la Fig. 4A.

Pour permettre à l'équipement MME 114 de vérifier la présence de l'équipement utilisateur 111 dans la zone de couverture du réseau de communication cellulaire, l'équipement utilisateur 111 est adapté pour transmettre à l'équipement MME 114 un message de requête de mise à jour de zones de localisation soit lorsque ledit équipement utilisateur 111 change de zone, soit périodiquement si ledit équipement utilisateur 111 ne change pas de zone. Une procédure se met alors en place entre l'équipement utilisateur 111 et l'équipement MME 114, tel que décrit ci-après en relation avec la Fig. 4B. Dans le cas périodique, la périodicité de cette transmission de message de requête de mise à jour de zones de localisation est définie par une temporisation T1 dont la durée est fixée par l'équipement MME 114. L'équipement MME 114 fournit la valeur de durée de la temporisation T1 dans le cadre des procédures d'enregistrement et de mise à jour de zones de localisation, valeur à appliquer au compteur T3412 dans les technologies LTE. Comme détaillé ci-après, l'équipement utilisateur 111 propose toutefois une durée pour la temporisation T1, ce qui permet de prendre en compte le caractère mobile, ou pas mobile ou peu mobile, de l'équipement utilisateur 111.

La Fig. 2 illustre schématiquement un exemple d'architecture matérielle de l'équipement utilisateur 111. L'équipement utilisateur 111 comporte alors, reliés par un bus de communication 210 : un processeur ou CPU (« Central Processing Unit » en anglais) 200 ; une mémoire vive RAM (« Random Access Memory » en anglais) 201 ; une mémoire morte ROM (« Read Only Memory » en anglais) 202 ; au moins une unité de stockage 203, tel qu'un disque dur HDD (« Hard Disk Drive » en anglais) et/ou un lecteur de support de stockage, tel qu'un lecteur de cartes SD (« Secure Digital » en anglais) ; et une interface 204 permettant de communiquer avec le réseau de communication cellulaire.

Le processeur 200 est capable d'exécuter des instructions chargées dans la RAM 201 à partir de la ROM 202, d'une mémoire externe (non représentée), d'un support de stockage, ou d'un réseau de communication. Lorsque l'équipement utilisateur 111 est mis sous tension, le processeur 200 est capable de lire de la RAM 201 des instructions et de les exécuter. Ces instructions forment un programme d'ordinateur causant la mise en oeuvre, par le processeur 200, de tout ou partie des algorithmes et étapes décrits en relation avec l'équipement utilisateur 111.

Ainsi, tout ou partie des algorithmes et étapes décrits en relation avec l'équipement utilisateur 111 peut être implémenté sous forme logicielle par exécution d'un ensemble d'instructions par une machine programmable, telle qu'un DSP (« Digital Signal Processor » en anglais) ou un microcontrôleur. Tout ou partie des algorithmes et étapes décrits en relation avec l'équipement utilisateur 111 peut aussi être implémenté sous forme matérielle par une machine ou un composant dédié, tel qu'un FPGA (« Field-Programmable Gate Array » en anglais) ou un ASIC (« Application-Specific Integrated Circuit » en anglais).

La Fig. 3 illustre schématiquement un exemple d'architecture matérielle de l'équipement MME 114. L'équipement MME 114 comporte alors, reliés par un bus de communication 310 : un processeur ou CPU 300 ; une mémoire vive RAM 301 ; une mémoire morte ROM 302 ; au moins une unité de stockage 303, tel qu'un disque dur HDD et/ou un lecteur de support de stockage, tel qu'un lecteur de cartes SD ; et une interface 304 permettant de communiquer au sein du réseau de communication cellulaire.

Le processeur 300 est capable d'exécuter des instructions chargées dans la RAM 301 à partir de la ROM 302, d'une mémoire externe (non représentée), d'un support de stockage, ou d'un réseau de communication. Lorsque l'équipement MME 114 est mis sous tension, le processeur 300 est capable de lire de la RAM 301 des instructions et de les exécuter. Ces instructions forment un programme d'ordinateur causant la mise en oeuvre, par le processeur 300, de tout ou partie des algorithmes et étapes décrits en relation avec l'équipement MME 114.

Ainsi, tout ou partie des algorithmes et étapes décrits en relation avec l'équipement MME 114 peut être implémenté sous forme logicielle par exécution d'un ensemble d'instructions par une machine programmable, telle qu'un DSP ou un microcontrôleur. Tout ou partie des algorithmes et étapes décrits en relation avec l'équipement MME 114 peut aussi être implémenté sous forme matérielle par une machine ou un composant dédié, tel qu'un FPGA ou un ASIC.

La Fig. 4A illustre schématiquement des échanges dans le cadre d'une procédure d'enregistrement de l'équipement utilisateur 111 auprès du réseau de communication cellulaire.

Dans une étape 401, l'équipement utilisateur 111 transmet à l'équipement MME 114 un message de requête d'attachement pour s'enregistrer auprès du réseau coeur. Dans les technologies LTE, ce message est appelé ATTACH REQUEST. L'équipement utilisateur 111 inclut dans ledit message une proposition de durée à appliquer à la temporisation T1.

Lorsque l'équipement utilisateur 111 est destiné à être immobile, ce qui est par exemple le cas lorsque l'équipement utilisateur 111 est une passerelle résidentielle fournissant un accès à l'Internet, l'équipement utilisateur 111 définit ladite proposition de durée comme étant représentative d'une désactivation de la temporisation T1.

Dans une étape 402 suivante, l'équipement MME 114 échange avec l'équipement HSS 115 pour préparer l'environnement nécessaire à l'équipement utilisateur 111 pour établir des connexions via le réseau de communication cellulaire, notamment en vérifiant le profil utilisateur de souscription aux services du réseau de communication cellulaire qui est associé à l'équipement utilisateur 111. Dans le cadre des technologies LTE, de l'étape 402 résulte une attribution d'une adresse IP (« Internet Protocol » en anglais) à l'équipement utilisateur 111.

En outre, l'équipement MME 114 extrait, du message envoyé à l'étape 401 par l'équipement utilisateur 111, la proposition de durée faite par l'équipement utilisateur 111 pour la temporisation T1. L'équipement MME 114 vérifie si la valeur proposée est compatible avec l'état courant du réseau de communication cellulaire, par exemple notamment vis-à-vis d'un critère de charge du réseau de communication cellulaire et/ou du réseau coeur. Si la valeur proposée est compatible, l'équipement MME 114 peut confirmer la valeur proposée par l'équipement utilisateur 111 ; sinon, l'équipement MME 114 détermine la valeur de durée à appliquer à la temporisation T1 sans prendre en compte la valeur proposée par l'équipement utilisateur 111.

Dans une étape 403 suivante, l'équipement MME 114 transmet un message de réponse à l'équipement utilisateur 111. A moins qu'un problème ne soit survenu à l'étape 402, ce message de réponse est un message d'acceptation d'attachement. Dans les technologies LTE, ce message est appelé ATTACH ACCEPT. Le message d'acceptation d'attachement inclut la valeur de durée à appliquer à la temporisation T1, telle que décidée par l'équipement MME 114 d'après la proposition faite par l'équipement utilisateur 111.

Le message transmis à l'étape 403 peut en outre inclure une liste de zones de localisation que l'équipement utilisateur 111 doit surveiller. Dans un mode de réalisation particulier, l'équipement MME 114 limite, dans le message d'acceptation d'attachement, la liste de zones de localisation à surveiller à une unique zone de localisation. Dans un mode de réalisation encore plus particulier, l'équipement MME 114 identifie ladite unique zone de localisation en extrayant du message transmis à l'étape 401 une information représentative de la zone de localisation où est localisé l'équipement utilisateur 111.

Dans une étape 404 suivante, l'équipement utilisateur 111 transmet à l'équipement MME 114 un message de confirmation de l'achèvement de la procédure d'enregistrement. Dans les technologies LTE, ce message est appelé ATTACH COMPLETE.

Dans un mode de réalisation particulier, lorsque l'équipement MME 114 reçoit à l'étape 401 un message de requête d'attachement incluant une information représentative d'une désactivation de la temporisation T1, l'équipement MME 114 coeur active, dans une étape 405 après réception du message transmis à l'étape 404, une autre temporisation T2 d'une durée prédéterminée. La gestion de cette autre temporisation T2 est décrite ci-après en relation avec les Figs. 5A et 5B.

La Fig. 4B illustre schématiquement des échanges dans le cadre d'une procédure de mise à jour de zones de localisation.

Dans une étape 411, l'équipement utilisateur 111 transmet à l'équipement MME 114 un message de requête de mise à jour de zones de localisation. Dans les technologies LTE, ce message est appelé TRACKING AREA UPDATE REQUEST. L'équipement utilisateur 111 inclut dans ledit message une proposition de durée à appliquer à la temporisation T1.

Lorsque l'équipement utilisateur 111 est destiné à être immobile, ce qui est par exemple le cas lorsque l'équipement utilisateur 111 est une passerelle résidentielle, l'équipement utilisateur 111 définit ladite proposition de durée comme étant représentative d'une désactivation de la temporisation T1.

Dans une étape 412 suivante, l'équipement MME 114 échange avec l'équipement HSS 115 pour effectuer d'éventuelles mises à jour de contexte associé à l'équipement utilisateur 111, notamment en ce qui concerne la localisation de l'équipement utilisateur 111 au sein du réseau de communication cellulaire.

En outre, l'équipement MME 114 extrait, du message envoyé à l'étape 411 par l'équipement utilisateur 111, la proposition de durée faite par l'équipement utilisateur 111 pour la temporisation T1. L'équipement MME 114 vérifie si la valeur proposée est compatible avec l'état courant du réseau de communication cellulaire, notamment vis-à-vis par exemple d'un critère de charge du réseau de communication cellulaire et/ou du réseau coeur. Si la valeur proposée est compatible, l'équipement MME 114 peut confirmer la valeur proposée par l'équipement utilisateur 111 ; sinon, l'équipement MME 114 détermine la valeur de durée à appliquer à la temporisation T1 sans prendre en compte la valeur proposée par l'équipement utilisateur 111.

Dans une étape 413 suivante, l'équipement MME 114 transmet un message de réponse à l'équipement utilisateur 111. A moins qu'un problème ne soit survenu à l'étape 412, ce message de réponse est un message d'acceptation de mise à jour de zones de localisation. Dans les technologies LTE, ce message est appelé TRACKING AREA UPDATE ACCEPT. Le message d'acceptation de mise à jour de zones de localisation inclut la valeur de durée à appliquer à la temporisation T1, telle que décidée par l'équipement MME 114 d'après la proposition faite par l'équipement utilisateur 111.

Le message transmis à l'étape 413 peut en outre inclure une liste de zones de localisation que l'équipement utilisateur 111 doit surveiller. Dans un mode de réalisation particulier, l'équipement MME 114 limite, dans le message d'acceptation de mise à jour de zones de localisation, la liste de zones de localisation à surveiller à une unique zone de localisation. Dans un mode de réalisation encore plus particulier, l'équipement MME 114 identifie ladite unique zone de localisation en extrayant du message transmis à l'étape 411 une information représentative de la zone de localisation où est localisé l'équipement utilisateur 111.

Dans une étape 414 suivante, l'équipement utilisateur 111 transmet à l'équipement MME 114 un message de confirmation de l'achèvement de la procédure de mise à jour de zones de localisation. Dans les technologies LTE, ce message est appelé TRACKING AREA UPDATE COMPLETE.

Dans un mode de réalisation particulier, lorsque l'autre temporisation est mise en oeuvre et lorsque l'équipement MME 114 reçoit à l'étape 411 un message de requête de mise à jour de zones de localisation incluant une information représentative d'une désactivation de la temporisation T1, l'équipement MME 114 active ou réinitialise, dans une étape 415 après réception du message transmis à l'étape 414, ladite autre temporisation T2.

La Fig. 5A illustre schématiquement un algorithme de gestion d'une temporisation de vérification de la présence de l'équipement utilisateur 111 dans le réseau de communication cellulaire. Dans le cadre de la Fig. 5A, il est considéré que l'équipement MME 114 a précédemment instruit l'équipement utilisateur 111 de désactiver la temporisation T1 et a activé la temporisation T2.

Dans une étape 501, l'équipement MME 114 détecte que l'équipement utilisateur 111 établit une connexion via le réseau de communication cellulaire.

Dans une étape 502 suivante, l'équipement MME 114 suspend la temporisation T2.

Dans une étape 503 suivante, l'équipement MME 114 détecte que l'équipement utilisateur 111 rompt la connexion établie via le réseau de communication cellulaire.

Dans une étape 504 suivante, l'équipement MME 114 réinitialise, et donc réactive, la temporisation T2.

La Fig. 5B illustre schématiquement un algorithme de vérification de la présence de l'équipement utilisateur 111 dans le réseau de communication cellulaire.

Dans une étape 511, l'équipement MME 114 détecte que l'autre temporisation T2 a expiré. En d'autres termes, l'équipement utilisateur 111 n'a pas établi de connexion via le réseau de communication cellulaire avant expiration de l'autre temporisation T2.

Dans une étape 512 suivante, l'équipement MME 114 transmet au moins un message de recherche de l'équipement utilisateur 111 au sein du réseau de communication. On parle alors de *paging request,* pour retrouver la localisation de l'équipement utilisateur 111.

## Revendications

1. Procédé de gestion d'un équipement utilisateur (111) dans un réseau de communication cellulaire comportant un réseau coeur (121) interconnectant un ensemble de cellules (120), un équipement (114) du réseau coeur étant en charge de gérer la mobilité des équipements utilisateur entre les cellules, l'équipement utilisateur transmettant (401) audit équipement du réseau coeur un message de requête d'attachement pour s'enregistrer auprès du réseau coeur, l'équipement utilisateur transmettant (411) audit équipement du réseau coeur un message de requête de mise à jour de zones de localisation à l'expiration d'une temporisation périodique de durée fixée par ledit équipement du réseau coeur dans un message d'acceptation d'attachement et/ou dans un message d'acceptation de mise à jour de zones de localisation ledit équipement utilisateur incluant, dans chaque message de requête d'attachement au réseau coeur et/ou dans chaque message de requête de mise à jour de zones de localisation, une proposition de durée à appliquer à ladite temporisation, **caractérisé en ce que** l'équipement utilisateur est apte à inclure dans un message de requête d'attachement au réseau coeur ou de requête de mise à jour de zones de localisation une information représentative d'une désactivation de ladite temporisation provoquant une activation dans ledit équipement du réseau coeur (405 ; 415) d'une autre temporisation d'une durée prédéterminée permettant audit équipement du réseau coeur de transmettre (512) au moins un message de recherche dudit équipement utilisateur, lorsque l'équipement utilisateur n'a pas établi de connexion via le réseau de communication cellulaire avant expiration de ladite autre temporisation.

2. Procédé de gestion selon la revendication 1, **caractérisé en ce que**, l'équipement utilisateur étant destiné à être immobile, l'équipement utilisateur définit ladite proposition de durée comme étant représentative d'une désactivation de ladite temporisation.

3. Procédé de gestion selon la revendication 1 ou 2, **caractérisé en ce que** ledit équipement du réseau coeur réinitialise ladite autre temporisation lorsque ledit équipement du réseau coeur reçoit, en provenance dudit équipement utilisateur, un message de requête de mise à jour de zones de localisation.

4. Procédé de gestion selon l'une quelconque des revendications 1 à 3, **caractérisé en ce que** ledit équipement du réseau coeur limite, dans le message d'acceptation d'attachement et/ou dans le message d'acceptation de mise à jour de zones de localisation, une liste de zones de localisation à surveiller par ledit équipement utilisateur à une unique zone de localisation.

5. Procédé de gestion selon la revendication 4, **caractérisé en ce que** ledit équipement du réseau coeur identifie ladite unique zone de localisation en extrayant du message de requête d'attachement au réseau coeur et/ou du message de requête de mise à jour de zones de localisation une information représentative d'une zone de localisation où est localisé ledit équipement utilisateur.

6. Procédé de gestion selon l'une quelconque des revendications 1 à 5, **caractérisé en ce que** ledit équipement utilisateur est une passerelle résidentielle ou un compteur intelligent.

7. Equipement utilisateur (111) destiné à être utilisé dans un réseau de communication cellulaire comportant un réseau coeur (121) interconnectant un ensemble de cellules (120), un équipement (114) du réseau coeur étant en charge de gérer la mobilité des équipements utilisateur entre les cellules, l'équipement utilisateur étant adapté pour transmettre (401) audit équipement du réseau coeur un message de requête d'attachement pour s'enregistrer auprès du réseau coeur, l'équipement utilisateur étant aussi adapté pour transmettre (411) audit équipement du réseau coeur un message de requête de mise à jour de zones de localisation à l'expiration d'une temporisation périodique de durée fixée par ledit équipement du réseau coeur dans un message d'acceptation d'attachement et/ou dans un message d'acceptation de mise à jour de zones de localisation, ledit équipement utilisateur comportant des moyens pour inclure, dans chaque message de requête d'attachement au réseau coeur et/ou dans chaque message de requête de mise à jour de zones de localisation, une proposition de durée à appliquer à ladite temporisation, **caractérisé en ce que** ledit équipement utilisateur comprend des moyens pour inclure dans un message de requête d'attachement au réseau coeur ou de requête de mise à jour de zones de localisation une information représentative d'une désactivation de ladite temporisation provoquant une activation dans ledit équipement du réseau coeur (405 ; 415) d'une autre temporisation d'une durée prédéterminée permettant audit équipement du réseau coeur de transmettre (512) au moins un message de recherche dudit équipement utilisateur, lorsque l'équipement utilisateur n'a pas établi de connexion via le réseau de communication cellulaire avant expiration de ladite autre temporisation.

8. Equipement utilisateur selon la revendication 7, **caractérisé en ce que** ledit équipement utilisateur est une passerelle résidentielle ou un compteur intelligent.

9. Programme d'ordinateur, **caractérisé en ce qu'**il comprend des instructions pour mettre en oeuvre, par un dispositif, le procédé selon l'une quelconque des revendications 1 à 6 lorsque ledit programme est exécuté par un processeur dudit dispositif.

10. Moyens de stockage, **caractérisés en ce qu'**ils stockent un programme d'ordinateur comprenant des instructions pour mettre en oeuvre, par un dispositif, le procédé selon l'une quelconque des revendications 1 à 6 lorsque ledit programme est exécuté par un processeur dudit dispositif.

## Patentansprüche

1. Verfahren zur Steuerung einer Benutzervorrichtung (111) in einem zellularen Kommunikationsnetzwerk, umfassend ein Kernnetzwerk (121), das eine Gesamtheit von Zellen (120) miteinander verbindet, wobei eine Ausrüstung (114) des Kernnetzwerks die Aufgabe hat, die Mobilität der Benutzervorrichtungen zwischen den Zellen zu steuern, wobei die Benutzervorrichtung an die Ausrüstung des Kernnetzwerks eine Anschlussanfragenachricht überträgt (401), um sich bei dem Kernnetzwerk zu registrieren, wobei die Benutzervorrichtung an die Ausrüstung des Kernnetzwerks eine Aktualisierungsanfragenachricht von Lokalisierungszonen bei Ablauf einer periodischen Zeitverzögerung mit einer Dauer überträgt (411), die von der Ausrüstung des Kernnetzwerks in einer Anschlussannahmenachricht und/oder in einer Aktualisierungsannahmenachricht von Lokalisierungszonen festgelegt wird, wobei die Benutzervorrichtung in jeder Anschlussanfragenachricht an das Kernnetzwerk und/oder in jeder Aktualisierungsanfragenachricht von Lokalisierungszonen einen Zeitdauervorschlag, der an der Zeitverzögerung anzuwenden ist, einschließt, **dadurch gekennzeichnet, dass** die Benutzervorrichtung geeignet ist, in eine Anschlussanfragenachricht an das Kernnetzwerk oder eine Aktualisierungsanfragenachricht von Lokalisierungszonen eine Information einzuschließen, die für eine Deaktivierung der Zeitverzögerung repräsentativ ist, die in der Ausrüstung des Kernnetzwerks (405; 415) eine weitere Zeitverzögerung mit einer vorbestimmten Zeitdauer hervorruft, die es der Ausrüstung des Kernnetzwerks ermöglicht, mindestens eine Suchnachricht der Benutzervorrichtung zu übertragen (512), wenn die Benutzervorrichtung keinen Anschluss über das zellulare Kommunikationsnetzwerk vor Ablauf der weiteren Zeitverzögerung hergestellt hat.

2. Steuerungsverfahren nach Anspruch 1, **dadurch gekennzeichnet, dass**, wobei die Benutzervorrichtung dazu bestimmt ist, unbeweglich zu sein, die Benutzervorrichtung den Zeitdauervorschlag als repräsentativ für eine Deaktivierung der Zeitverzögerung definiert.

3. Steuerungsverfahren nach Anspruch 1 oder 2, **dadurch gekennzeichnet, dass** die Ausrüstung des Kernnetzwerks die weitere Zeitverzögerung reinitialisiert, wenn die Ausrüstung des Kernnetzwerks von der Benutzervorrichtung eine Aktualisierungsanfragenachricht von Lokalisierungszonen erhält.

4. Steuerungsverfahren nach einem der Ansprüche 1 bis 3, **dadurch gekennzeichnet, dass** die Ausrüstung des Kernnetzwerks in der Anschlussannahmenachricht und/oder in der Aktualisierungsannahmenachricht von Lokalisierungszonen eine Liste von von der Benutzervorrichtung zu überwachenden Lokalisierungszonen auf eine einzige Lokalisierungszone begrenzt.

5. Steuerungsverfahren nach Anspruch 4, **dadurch gekennzeichnet, dass** die Ausrüstung des Kernnetzwerks die einzige Lokalisierungszone identifiziert, wobei sie aus der Anschlussanfragenachricht an das Kernnetzwerk und/oder der Aktualisierungsanfragenachricht von Lokalisierungszonen eine Information entnimmt, die für eine Lokalisierungszone, in der die Benutzervorrichtung lokalisiert ist, repräsentativ ist.

6. Steuerungsverfahren nach einem der Ansprüche 1 bis 5, **dadurch gekennzeichnet, dass** die Benutzervorrichtung ein Kabelmodem oder ein intelligenter Zähler ist.

7. Benutzervorrichtung (111), die dazu bestimmt ist, in einem zellularen Kommunikationsnetzwerk verwendet zu werden, umfassend ein Kernnetzwerk (121), das eine Gesamtheit von Zellen (120) miteinander verbindet, wobei eine Ausrüstung (114) des Kernnetzwerks die Aufgabe hat, die Mobilität der Benutzervorrichtungen zwischen den Zellen zu steuern, wobei die Benutzervorrichtung geeignet ist, an die Ausrüstung des Kernnetzwerks eine Anschlussanfragenachricht zu übertragen (401), um sich bei dem Kernnetzwerk zu registrieren, wobei die Benutzervorrichtung auch geeignet ist, an die Ausrüstung des Kernnetzwerks eine Aktualisierungsanfragenachricht von Lokalisierungszonen bei Ablauf einer periodischen Zeitverzögerung mit einer Dauer zu übertragen (411), die von der Ausrüstung des Kernnetzwerks in einer Anschlussannahmenachricht und/oder in einer Aktualisierungsannahmenachricht von Lokalisierungszonen festgelegt wird, wobei die Benutzervorrichtung Mittel umfasst, um in jede Anschlussanfragenachricht an das Kernnetzwerk und/oder in jede Aktualisierungsanfragenachricht von Lokalisierungszonen einen Zeitdauervorschlag, der an der Zeitverzögerung anzuwenden ist, einzuschließen, **dadurch gekennzeichnet, dass** die Benutzervorrichtung Mittel umfasst, um in eine Anschlussanfragenachricht an das Kernnetzwerk oder eine Aktualisierungsanfragenachricht von Lokalisierungszonen eine Information einzuschließen, die für eine Deaktivierung der Zeitverzögerung repräsentativ ist, die in der Ausrüstung des Kernnetzwerks (405; 415) eine Aktivierung einer weiteren Zeitverzögerung mit einer vorbestimmten Zeitdauer hervorruft, die es der Ausrüstung des Kernnetzwerks ermöglicht, mindestens eine Suchnachricht der Benutzervorrichtung zu übertragen (512), wenn die Benutzervorrichtung keinen Anschluss über das zellulare Kommunikationsnetzwerk vor Ablauf der weiteren Zeitverzögerung hergestellt hat.

8. Benutzervorrichtung nach Anspruch 7, **dadurch gekennzeichnet, dass** die Benutzervorrichtung ein Kabelmodem oder ein intelligenter Zähler ist.

9. Computerprogramm, **dadurch gekennzeichnet, dass** es Befehle umfasst, um durch eine Vorrichtung das Verfahren nach einem der Ansprüche 1 bis 6 einzusetzen, wenn das Programm von einem Prozessor der Vorrichtung ausgeführt wird.

10. Speichermittel, **dadurch gekennzeichnet, dass** sie ein Computerprogramm speichern, umfassend Befehle, um durch eine Vorrichtung das Verfahren nach einem der Ansprüche 1 bis 6 einzusetzen, wenn das Programm von einem Prozessor der Vorrichtung ausgeführt wird.

## Claims

1. Method for managing a user device (111) in a cellular communication network including a core network (121) interconnecting a set of cells (120), a device (114) of the core network being responsible for managing the mobility of the user devices between the cells, the user device transmitting (401), to said device of the core network, an attachment request message to register with the core network, the user device transmitting (411), to said device of the core network, a location area update request message upon expiry of a periodic timeout period having a duration set by said device of the core network in an attachment acceptance message and/or in a location area update acceptance message, said user device including, in each core network attachment request message and/or in each location area update request message, a proposed duration to be applied to said timeout period, **characterized in that** the user device is able to include, in a core network attachment request or location area update request message, an item of information representative of a deactivation of said timeout period, bringing about activation, in said device of the core network (405; 415), of another timeout period having a predetermined duration, allowing said device of the core network to transmit (512) at least one search message for said user device, when the user device has not established a connection via the cellular communication network before the expiry of said other timeout period.

2. Management method according to Claim 1, **characterized in that**, with the user device being intended to be stationary, the user device defines said proposed duration as being representative of a deactivation of said timeout period.

3. Management method according to Claim 1 or 2, **characterized in that** said device of the core network resets said other timeout period when said device of the core network receives, from said user device, a location area update request message.

4. Management method according to any one of Claims 1 to 3, **characterized in that** said device of the core network limits, in the attachment acceptance message and/or in the location area update acceptance message, a list of location areas to be monitored by said user device to a single location area.

5. Management method according to Claim 4, **characterized in that** said device of the core network identifies said single location area by extracting, from the core network attachment request message and/or from the location area update request message, an item of information representative of a location area in which said user device is located.

6. Management method according to any one of Claims 1 to 5, **characterized in that** said user device is a home gateway or a smart meter.

7. User device (111) intended to be used in a cellular communication network including a core network (121) interconnecting a set of cells (120), a device (114) of the core network being responsible for managing the mobility of the user devices between the cells, the user device being designed to transmit (401), to said device of the core network, an attachment request message to register with the core network, the user device also being designed to transmit (411), to said device of the core network, a location area update request message upon expiry of a periodic timeout period having a duration set by said device of the core network in an attachment acceptance message and/or in a location area update acceptance message, said user device including means for including, in each core network attachment request message and/or in each location area update request message, a proposed duration to be applied to said timeout period, **characterized in that** said user device comprises means for including, in a core network attachment request or location area update request message, an item of information representative of a deactivation of said timeout period, bringing about activation, in said device of the core network (405; 415), of another timeout period having a predetermined duration, allowing said device of the core network to transmit (512) at least one search message for said user device, when the user device has not established a connection via the cellular communication network before the expiry of said other timeout period.

8. User device according to Claim 7, **characterized in that** said user device is a home gateway or a smart meter.

9. Computer program, **characterized in that** it comprises instructions for an apparatus to implement the method according to any one of Claims 1 to 6 when said program is executed by a processor of said apparatus.

10. Storage means, **characterized in that** they store a computer program comprising instructions for an apparatus to implement the method according to any one of Claims 1 to 6 when said program is executed by a processor of said apparatus.
